# EUROPEAN PATENT APPLICATION

(11) **EP 3 546 092 A1**
(43) Date of publication of application: **02.10.2019**
(21) Application number: 18164483.2
(22) Date of filing: 28.03.2018
(51) Int. Cl.: B22F 3/105, B33Y 10/00, B33Y 30/00, B29C 64/153, B29C 64/35, B29C 64/357

(54) **GENERATIVE MANUFACTURING DEVICE AND METHOD FOR OPERATING THE DEVICE**

(71) Applicant: Siemens Aktiengesellschaft, 80333 München (DE)
(72) Inventor: Lebed, Yaroslav, 13629 Berlin (DE)

(57) **Abstract**

The invention relates to a generative manufacturing device for manufacturing a component (13) from a powder (12), wherein the generative manufacturing device comprises at least one chamber (2 to 4) confined at the bottom by a respective piston (5 to 7), on the sides by a first wall (15) and a second wall (16) and being open on top, and a transporting gas circuit (27) adapted to circulate a transporting gas for transporting the powder (12) and comprising a supply nozzle (22) arranged neighboured to the first wall (15) and adapted to guide the transporting gas over the chamber (2 to 4) in a flow direction from the first wall (15) to the second wall (16), and a transporting gas exhaust (24) arranged in the flow direction after the second wall (16) and adapted to guide the transporting gas downwards after it has passed over the second wall (16).

## Description

A selective laser melting device is a device in which a component is manufactured in layers by selective laser melting of a powder. After the component has been manufactured, the selective laser melting device needs to be cleaned. In order to clean the selective laser melting device, it has to be opened and the powder is removed manually by means of a vacuum cleaner in particularly from the component. The cleaning with the vacuum cleaner is disadvantageously time-consuming. Furthermore, the powder can escape in the space surrounding the selective laser melting device. This is particularly critical when the powder is toxic, as it can be the case if the powder is metallic. Therefore, personal has to wear personal protective equipment, like breathing masks and full-body overalls, during cleaning of the selective laser melting device. Furthermore, a factory, in which the selective laser melting device is installed, needs to be equipped with an expensive filtering system for filtering the powder out of the factory's air.

It is therefore an object of the invention to provide a generative manufacturing device and a method for operating the generative manufacturing device in order to allow an improved cleaning process.

The generative manufacturing device for manufacturing a component from a powder according to the invention comprises at least one chamber confined at the bottom by a respective piston, on the sides by a first wall and a second wall and being open on top, and a transporting gas circuit adapted to circulate a transporting gas for transporting the powder and comprising a supply nozzle arranged neighboured to the first wall and adapted to guide the transporting gas over the chamber in a flow direction from the first wall to the second wall, and a transporting gas exhaust arranged in the flow direction after the second wall and adapted to guide the transporting gas downwards after it has passed over the second wall.

The method for operating the generative manufacturing device according to the invention comprises the steps: - filling the powder in at least one of the chambers; - moving the piston of the at least one of the chambers upwards and circulating the transporting gas so that the transporting gas carries the powder from the at least one of the chambers into the transporting gas exhaust.

With the generative manufacturing device according to the invention and the method for operating the generative manufacturing device according to the invention, cleaning of the generative manufacturing device is automated and it is no longer necessary to manually remove the powder. Already for this reason, the cleaning is improved. Furthermore, the cleaning can be carried out with the generative manufacturing device remaining closed, which avoids that the powder escapes into the space surrounding the generative manufacturing device. This decreases health risks for personal operating the generative manufacturing device and saves costs for personal protective equipment.

It is preferred that the generative manufacturing device comprises a plurality of the chambers arranged next to each other, wherein a respective one of the supply nozzles is provided for each of the chambers. It is thereby advantageously possible to clean each of the chambers individually by passing the transporting gas only through the supply nozzle that belongs to the chamber that is supposed to be cleaned. It is hereby preferred that a respective one of the transporting gas exhausts is provided for each of the chambers. In this manner, it is possible to maintain a uniform flow of the transporting gas by passing the transporting gas only through the transporting gas exhaust that belongs to the chamber that is supposed to be cleaned.

One of the chambers is preferably a build chamber. The build chamber is the chamber in which the component is manufactured from the powder. After the component has been manufactured, the remaining powder can be easily removed by the transporting gas circuit. It is hereby conceivable to leave the component in the build chamber during the cleaning and/or to take it out of the build chamber before the cleaning. Another one of the chambers is preferably a supply chamber. The powder is filled in the supply chamber and transported from the supply chamber to the build chamber during the manufacturing of the component. Another one of the chambers is preferably an overflow chamber. When the powder is transported to the build chamber, usually more of the powder is transported than needed in the build chamber. The excess of the powder is transported into the overflow chamber.

It is preferred that the generative manufacturing device comprises a shielding gas circuit comprising a shielding gas exhaust and adapted to circulate a shielding gas such that it is guided through the supply nozzle, downstream from the supply nozzle in the flow direction over the chamber and downstream from the second wall into the shielding gas exhaust. Since the same nozzle is used for the shielding gas and for the transporting gas, the generative manufacturing device has advantageously a simple design. The shielding gas can be an inert gas, for example nitrogen or a noble gas. The shielding gas advantageously prevents oxidation of the powder and of the component during the manufacturing and carries away contaminations generated during the manufacturing of the component. It is therefore preferred that the shielding gas is only guided through the supply nozzle that belongs to the build chamber.

The shielding gas exhaust is preferably arranged in the flow direction after the transporting gas exhaust. In this manner, the transporting gas circuit and the shielding gas circuit share a common path from the supply nozzle over the chamber. The transporting gas circuit and the shielding gas circuit branch after the second wall. Since the shielding gas exhaust is arranged in the flow direction after the transporting gas exhaust, it is advantageously achieved that little or no amount of the powder enters the shielding gas exhaust when the transporting gas is circulated in the transporting gas circuit. It is furthermore preferred that the shielding gas exhaust is adapted to guide the shielding gas in a horizontal direction. Since on the other hand the transporting gas exhaust is adapted to guide the transporting gas downwards and the powder will be inclined to move downwards due to gravity, the amount of the powder that enters the shielding gas exhaust can be further decreased.

It is preferred that the generative manufacturing device is adapted to operate either the shielding gas circuit or the transporting gas circuit, i.e. the shielding gas circuit and the transporting gas circuit can not be operated simultaneously. This also reduces the amount of the powder that enters the shielding gas exhaust when the transporting gas circuit is operated. When the shielding gas circuit is operated some of the powder might be carried away from the chamber by the shielding gas. Since the transporting gas exhaust is arranged in the flow direction before the shielding gas exhaust and is adapted to guide the transporting gas downwards, some of the powder carried away during the operation of the shielding gas falls downwards in the transporting gas exhaust due to the gravity. This advantageously reduces the amount of the powder that enters the shielding gas exhaust when the shielding gas circuit is operated.

The transporting gas circuit preferably comprises a separator adapted to separate the powder from the transporting gas by means of gravity. Using gravity for the separation is a simple and cost-efficient way to separate the powder from the transporting gas. The powder separated by the separator can be reused for the manufacturing of another one of the components. The separator can be arranged downstream from the transporting gas exhaust and upstream from the supply nozzle.

It is preferred that generative manufacturing device is a selective laser melting device.

It is preferred that the method comprises the step: - manufacturing the component from the powder while circulating the shielding gas so that the upper end of the powder is covered by the shielding gas. In this manner, oxidation of the powder and the component can be avoided and contaminations generated during the manufacturing are carried away. It is furthermore preferred that during the manufacturing of the component the transporting gas is not circulated in the transporting gas circuit.

It is preferred that during circulating the transporting gas a cover is placed over at least one of the chambers and over the supply nozzle 22 that belongs to the at least one of the chambers 2 to 4. In this manner, less of the powder is transported upwards in the generative manufacturing device, where it can possibly be deposited on optics or on a laser.

In the following, the invention is explained on the basis of schematic drawings.
Figure 1 shows a cross section through a selective laser melting device.
Figure 2 shows a perspective view of the selective laser melting device.
Figure 3 shows another perspective view of the selective laser melting device.

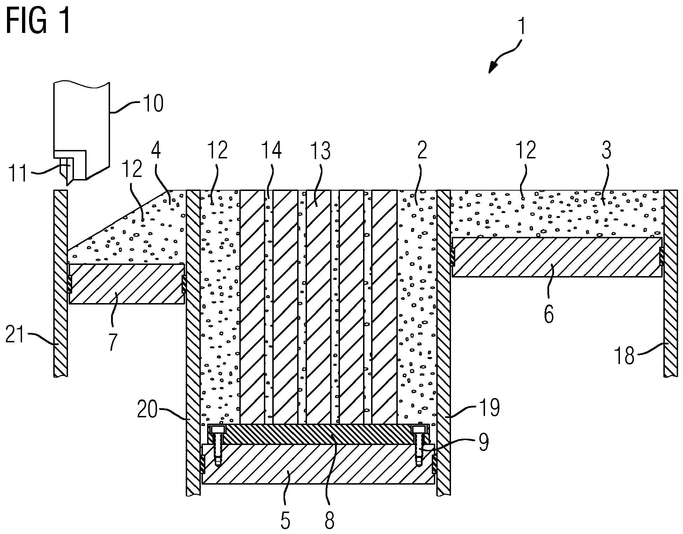

Figures 1 to 3 show a generative manufacturing device according to the invention. The generative manufacturing device is adapted to manufacture a component 13 from a powder 12. The powder 12 can be for example a metallic powder and/or a ceramic powder. In the case of the Figures 1 to 3, the generative manufacturing device is a selective laser melting device 1. The generative manufacturing device comprises at least one chamber 2 to 4 and a transporting gas circuit 27. The generative manufacturing device comprises for each of the chambers 5 to 7 a respective piston that confines the respective chamber 2 to 4 at the bottom and that can be shifted vertically. The generative manufacturing device comprises a first wall 15 and a second wall 16 that are arranged parallel to each other and confine each of the chambers 2 to 4 on the sides. Each of the chambers 2 to 4 are open on top.

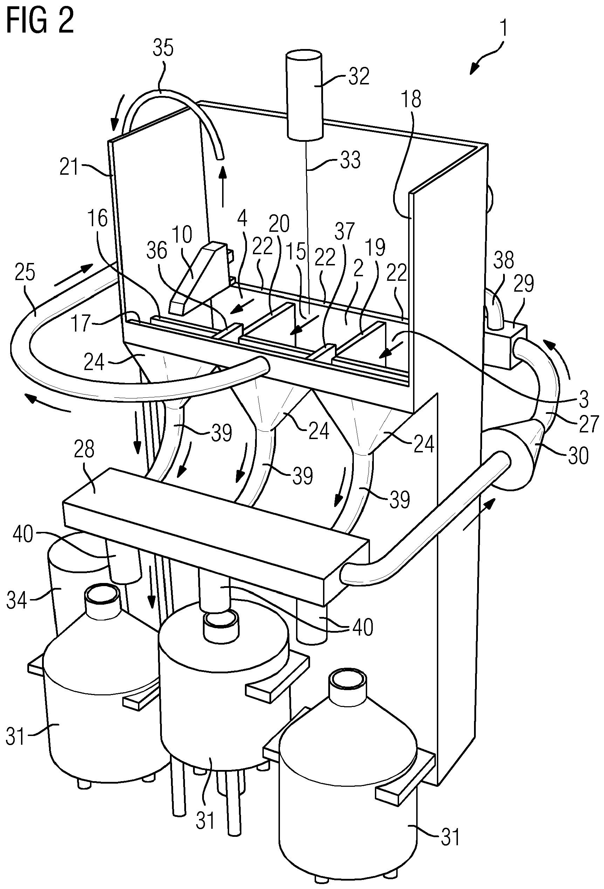

The transporting gas circuit 27 is adapted to circulate a transporting gas for transporting the powder 12. The transporting gas circuit 27 comprises a supply nozzle 22 that is arranged neighboured to the first wall 15 and adapted to guide the transporting gas over the chamber 2 to 4 in a flow direction from the first wall 15 to the second wall 16. The flow direction is indicated in Figure 2 by a respective arrow over each of the chambers 2 to 4. Furthermore, the transporting gas circuit 27 comprises a transporting gas exhaust 24 that is arranged in the flow direction after the second wall 16 and adapted to guide the transporting gas downwards after it has passed over the second wall 16.

Figures 1 and 2 show that one of the chambers is a build chamber 2, one of the chambers is a supply chamber 3 and one of the chambers is an overflow chamber 4, wherein the chambers 2 to 4 are arranged next to each other. The generative manufacturing device comprises a wall 18 confining the supply chamber 3 and being arranged perpendicular to the first wall 15, a wall 19 confining the supply chamber 3 and the build chamber 2 and being arranged perpendicular to the first wall 15, a wall 20 confining the build chamber 2 and the overflow chamber 4 and being arranged perpendicular to the first wall 15, and a wall 21 confining the overflow chamber 4 and being arranged perpendicular to the first wall 15. A build piston 5 confines the build chamber 2 at the bottom, a supply piston 6 confines the supply chamber 3 at the bottom, and an overflow piston 6 confines the overflow piston 4 at the bottom.

The build chamber 2 is arranged between the supply chamber 3 and the overflow chamber 4 and is the chamber in which the component 13 is manufactured from the powder 12. The generative manufacturing device comprises a coater 10 that comprises a blade 11. During the manufacturing of the component 13, the powder 12 is transported from the top of the supply chamber 3 to the build chamber 2. Powder that is in excess for being transported to the build chamber 2 is transported to the overflow chamber 4.

A platform 8 is arranged on top of the build piston 5 and fixed to the build piston 5 by means of a fastening means, e.g. by screws 9. The component 13 is directly manufactured on the platform 8. In the case that the generative manufacturing device is a selective laser melting device 1, the selective laser melting device 1 comprises a laser 32 that is adapted to emit a laser beam 33 on top of the build chamber 2 for a selective laser melting of the powder 12. The component 13 might comprise gaps 14 that are filled by the powder 13 after the manufacturing.

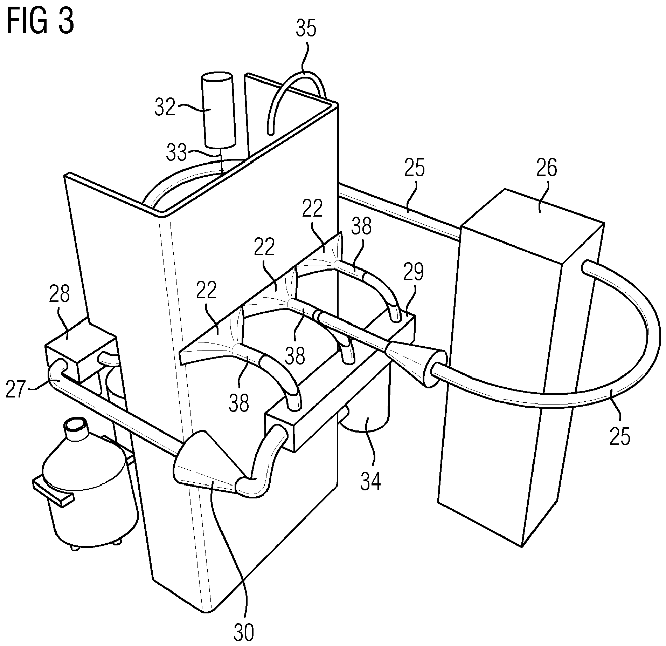

Figures 2 and 3 show that the transporting gas circuit 27 comprises a respective one of the supply nozzles 22 for each of the chambers 2 to 4. As it can be seen in Figure 2, the transporting gas circuit 27 comprises a respective one of the transporting gas exhausts 24 for each of the chambers 2 to 4. As it can be seen from Figure 2, the generative manufacturing device comprises a first separating wall 36 and a second separating wall 37 that are arranged perpendicular and adjacent to the second wall 16. The first separating wall 36 is arranged between the transporting gas exhaust 24 that belongs to the overflow chamber 4 and the transporting gas exhaust 24 that belongs to the build chamber 2. The first separating wall 36 is adapted to separate the flows of the transporting gas in the transporting gas exhaust 24 that belongs to the overflow chamber 4 and the transporting gas exhaust 24 that belongs to the build chamber 2. The second separating wall 37 is arranged between the transporting gas exhaust 24 that belongs to the supply chamber 3 and the transporting gas exhaust 24 that belongs to the build chamber 2. The second separating wall 37 is adapted to separate the flows of the transporting gas in the transporting gas exhaust 24 that belongs to the supply chamber 3 and the transporting gas exhaust 24 that belongs to the build chamber 2.

The transporting gas circuit 27 furthermore comprises a separating manifold 28 arranged downstream from the transporting gas exhausts 24, a pump 30 arranged downstream from the separating manifold 28, and a distributing manifold 29 arranged downstream from the pump 30 and upstream from the supply nozzles 24. Operation of the transporting gas circuit 27 works as described in the following: Pressure of the transporting gas, which can be for example air or an inert gas, e.g. nitrogen or a noble gas, is increased by means of the pump 30. The transporting gas is then streamed to the separating manifold 29, which is indicated in Figure 2 by an arrow. From the separating manifold 29 the transporting gas is then flowed via a respective tube 38 to the three supply nozzles 22. A cut-off valve can be placed in each of the three tubes 38 so that each of the supply nozzles 22 can be streamed through by the transporting gas individually. The supply nozzles 22 are adapted to generate a laminar flow of the transporting gas over the chambers 2 to 4. The transporting gas exhausts 24 are immediately arranged behind the second wall 16 so that after passing the top end of the second wall 16 the transporting gas is sucked in the transporting gas exhausts 24 and immediately changes its direction downwards. This is indicated in Figure 2 by three arrows pointing downwards. The transporting gas exhausts 24 can be formed in shape of nozzles. The transporting gas is streamed from the transporting gas exhausts 24 to the separating manifold 28 via a respective tube 39 for each of the transporting gas exhausts. A cut-off valve can be placed in each of the three tubes 39 so that each of the transporting gas exhausts 24 can be streamed through by the transporting gas individually. The generative manufacturing device can be adapted to open the two cut-off valves that belong to the same of the chambers 2 to 4. In the separating manifold 28 the flows from the three transporting gas exhausts 24 is united in one flow. From the separating manifold 28 the transporting gas is streamed to the pump 30, which is indicated by another arrow.

The separating manifold 28 is formed as a separator that is adapted to separate the powder 12 from the transporting gas by means of gravity. For separating the powder 12 from the transporting gas, the generative manufacturing device comprises three containers 31 and the separating manifold 28 comprises three tubes 40 connecting the transporting gas circuit 27 with the containers 31, wherein one of the tubes 40 connecting the transporting gas circuit 27 with the containers 31 is provided for each of the transporting gas exhausts 24. The tubes 40 connecting the transporting gas circuit 27 with the containers 31 are directed downwards so that the powder 12 falls into the containers 31 by the gravity. The connections from the tubes 40 connecting the transporting gas circuit 27 with the containers 31 are shown open in Figure 2 for a better illustration but are closed during the operation of the transporting gas circuit 27. It is also conceivable that only one of the tubes 40 connecting the transporting gas circuit 27 with the containers 31 and only one of the containers 31 is provided.

Figures 2 and 3 show that the generative manufacturing device comprises a shielding gas circuit 25 comprising a shielding gas exhaust 23 and adapted to circulate a shielding gas such that it is guided through the supply nozzle 22, downstream from the supply nozzle 22 that belongs to build chamber 2 in the flow direction over the build chamber 2 and downstream from the second wall 16 into the shielding gas exhaust 23.

The shielding gas can be an inert gas, for example nitrogen or a noble gas. The shielding gas exhaust 23 can be formed in the shape of a nozzle. For forming the shielding gas exhaust 23, the generative manufacturing device comprises a third wall 17 that is parallel to the second wall 16 and comprises an opening that forms the shielding gas exhaust 23. The third wall 17 together with the second wall 16 confine the stream of the transporting gas downwards after the transporting gas has passed over the second wall 16. The shielding gas exhaust 23 is therefore arranged in the flow direction after the transporting gas exhaust 24. Furthermore, the shielding gas exhaust 23 is adapted to guide the shielding gas in a horizontal direction. The shielding gas circuit 25 furthermore comprises a filtering unit 26 that is adapted to filter the shielding gas and that is arranged downstream from the shielding gas exhaust 23 and upstream from the supply nozzle 22. The generative manufacturing device can be adapted to operate either the shielding gas circuit 25 or the transporting gas circuit 27 but not both simultaneously.

As it can be seen in Figures 2 and 3, the generative manufacturing device comprises a vacuum cleaner 34 and a vacuum tube 35. The vacuum cleaner 34 is adapted to suck gas out of the generative manufacturing device via the vacuum tube 35. This is particular relevant for removing powder that has been transported upwards from the chambers 2 to 4 by the transporting gas.

The generative manufacturing device can be operated with the steps: - filling the powder 12 in at least one of the chambers 2 to 4; - moving the piston 5 to 7 of the at least one of the chambers 2 to 4 upwards and circulating the transporting gas 12 so that the transporting gas carries the powder 12 from the at least one of the chambers 2 to 4 into the transporting gas exhaust 24. The piston 5 to 7 can be moved upwards continuously or in steps. The generative manufacturing device can be operated with the further step: - manufacturing the component 13 from the powder 12 while circulating the shielding gas so that the upper end of the powder 12 is covered by the shielding gas.

It is conceivable that during circulating the transporting gas 12 a cover is placed over at least one of the chambers 2 to 4 and over the supply nozzle 22 that belongs to the at least one of the chambers 2 to 4. The cover can extend from the first wall 15 to the third wall 17. In case that the component 13 is taken out of the build chamber 2 before the cleaning, the cover can extend over all of the chamber 2 to 4. Otherwise, the cover can extend only over the supply chamber 3 and the overflow chamber 5 or it can have a hole for the component 3.

Although the invention is described in detail by the preferred embodiment, the invention is not constrained by the disclosed examples and other variations can be derived by the person skilled in the art, without leaving the extent of the protection of the invention.

## Claims

1. Generative manufacturing device for manufacturing a component (13) from a powder (12), wherein the generative manufacturing device comprises at least one chamber (2 to 4) confined at the bottom by a respective piston (5 to 7), on the sides by a first wall (15) and a second wall (16) and being open on top, and a transporting gas circuit (27) adapted to circulate a transporting gas for transporting the powder (12) and comprising a supply nozzle (22) arranged neighboured to the first wall (15) and adapted to guide the transporting gas over the chamber (2 to 4) in a flow direction from the first wall (15) to the second wall (16), and a transporting gas exhaust (24) arranged in the flow direction after the second wall (16) and adapted to guide the transporting gas downwards after it has passed over the second wall (16).

2. Generative manufacturing device according to claim 1, wherein the generative manufacturing device comprises a plurality of the chambers (2 to 4) arranged next to each other, wherein a respective one of the supply nozzles (22) is provided for each of the chambers (2 to 4).

3. Generative manufacturing device according to claim 2, wherein a respective one of the transporting gas exhausts (24) is provided for each of the chambers (2 to 4).

4. Generative manufacturing device according to any one of claims 1 to 3, wherein one of the chambers is a build chamber (2), in particular wherein another one of the chambers is a supply chamber (3), in particular wherein another one of the chambers is an overflow chamber (4).

5. Generative manufacturing device according to any one of claims 1 to 4, wherein the generative manufacturing device comprises a shielding gas circuit (25) comprising a shielding gas exhaust (23) and adapted to circulate a shielding gas such that it is guided through the supply nozzle (22), downstream from the supply nozzle (22) in the flow direction over the chamber (2 to 4) and downstream from the second wall (16) into the shielding gas exhaust (23).

6. Generative manufacturing device according to claim 5, wherein the shielding gas exhaust (23) is arranged in the flow direction after the transporting gas exhaust (24) and is in particularly adapted to guide the shielding gas in a horizontal direction.

7. Generative manufacturing device according to claim 5 or 6, wherein the generative manufacturing device is adapted to operate either the shielding gas circuit (25) or the transporting gas circuit (27).

8. Generative manufacturing device according to any one of claims 1 to 7, wherein the transporting gas circuit (27) comprises a separator adapted to separate the powder (12) from the transporting gas by means of gravity.

9. Generative manufacturing device according to any one of claims 1 to 8, wherein the generative manufacturing device is a selective laser melting device (1).

10. Method for operating a generative manufacturing device according to any one of claims 1 to 9, with the steps:
- filling the powder (12) in at least one of the chambers (2 to 4) ;
- moving the piston (5 to 7) of the at least one of the chambers (2 to 4) upwards and circulating the transporting gas (12) so that the transporting gas carries the powder (12) from the at least one of the chambers (2 to 4) into the transporting gas exhaust (24).

11. Method according to claim 10, with the step:
- manufacturing the component (13) from the powder (12) while circulating the shielding gas so that the upper end of the powder (12) is covered by the shielding gas.

12. Method according to claim 10 or 11, wherein during circulating the transporting gas (12) a cover is placed over at least one of the chambers (2 to 4) and over the supply nozzle (22) that belongs to the at least one of the chambers (2 to 4).
